# EUROPEAN PATENT APPLICATION

(11) **EP 2 645 238 A1**
(43) Date of publication of application: **02.10.2013**
(21) Application number: 11843575.9
(22) Date of filing: 20.09.2011
(51) Int. Cl.: G06F 9/44

(54) **FILE-PROCESSING DEVICE FOR EXECUTING A PRE-PROCESSED FILE, AND RECORDING MEDIUM FOR EXECUTING A RELATED FILE-PROCESSING METHOD IN A COMPUTER**

(30) Priority: 22.11.2010 KR 20100116301
(71) Applicant: Fasoo. Com Co., Ltd, Seoul 121-270 (KR)
(72) Inventor: LEE, Hyung-Joo, Seoul 122-760 (KR)
(74) Representative: Grünecker, Kinkeldey, Stockmair & Schwanhäusser
(86) International application number: PCT/KR2011/006948
(87) International publication number: WO 2012/070757

(57) **Abstract**

Disclosed are a file-processing device for executing a pre-processed file, and a recording medium for executing a related file-processing method in a computer. Once a request for registry information corresponding to the extension of a file is inputted according to a request for the execution of the file selected by the user, a registry-converting unit outputs a preset substitute value instead of the registry default value for executing a connection program corresponding to the extension of the file as the result value for the registry information request. A control unit pre-processes the file through a control program set in correspondence to the substitute value. A file-executing unit executes the file by executing the connection program of the file corresponding to the registry default value after pre-processing. According to the present invention, the file for which an execution request is inputted is identified in advance; the preprocessing required for the corresponding file is performed through the control program, which is executed before the connection program of the corresponding file is executed; and the corresponding file is executed. Therefore, the above may be applied to an existing system without restriction, and user convenience may be improved.

## Description

### Technical Field

The present invention relates, in general, to a file processing device for executing a preprocessed file and a recording medium for performing a method of executing a preprocessed file on a computer and, more particularly, to a device and method for performing a process of associating a data file with an executable program.

### Background Art

The Windows operating system (OS) provides a function of enabling an associated program to be designated based on the extension of a file, to select or double-click a data file, other than an executable program, and then to perform tasks, such as Open, Install, Print and Save As, via a shell. Additionally, the Windows OS provides a function of enabling a program that is run for the same extension to be changed by changing an associated program through the installation of a new program or a change in settings. These functions are useful from a user's point of view, but are disadvantageous in that additional processing using a larger amount of information, which is performed prior to the running of an associated program is limited because the identification information of the associated program is restricted to the extension of a file.

Accordingly, there have been attempts to meet various user scenarios, such as a change in settings, using obtainable additional information, other than the extension of a file, or to enhance a function without reinstalling an existing distributed program.

Obtainable additional information related to a file includes the size and name of the file, a folder where the file is located, the attribute and summary information of the file, the format of the file, the environment variables of a current user, and information about a program associated with the data file. User-defined operations that may be performed using such additional information include an operation of blocking/allowing a print based on the Digital Rights Management (DRM) rights of a currently selected file or virtualizing an associated program if the currently selected file is in a DRM format, an operation of eliminating a corresponding attribute and then transferring a currently selected file to an associated program if the attribute of the file corresponds to read-only, an operation of encrypting a currently selected file and then transferring the corresponding file to an associated program if the content of the corresponding file includes personal information, an operation of converting an associated program into a DRM control-enabled substitute program if a currently selected file is in a DRM format, an operation of moving a currently selected file to a designated backup folder if the size of the corresponding file is equal to or larger than a specific value, and an operation of converting a currently selected file into a new-version format and then running an associated program if the corresponding file is in an old-version DRM format.

There is a need for a system that is capable of obtaining necessary information from a selected file and performing an operation defined by a user or set previously, as described above.

### Disclosure

### Technical Problem

An object of the present invention is to provide a file processing device for executing a preprocessed file, which can perform preprocessing defined for a file to be executed prior to associating the file with an executable program for the corresponding file, thereby improving a user's convenience related to file processing.

Another object of the present invention is to provide a recording medium for performing a method of executing a preprocessed file on a computer, which can perform processing defined by a user on a selected file using registry information prior to the running of an associated program for the corresponding file, thereby improving a user's convenience related to file processing.

### Technical Solution

In order to accomplish the above object, the present invention provides a file processing device for executing a preprocessed file, including a registry converting unit configured to, when a request for registry information corresponding to an extension of a file selected by a user is input in response to a request for execution of the file, cause a preset substitute value, instead of a registry default value for running an associated program corresponding to the extension of the file, to be output as a result value for the request for registry information; a control unit configured to perform preprocessing set for the file by means of a control program set in accordance with the substitute value; and a file executing unit configured to execute the file by running an associated program for the file, corresponding to the registry default value, after performing the preprocessing.

In order to accomplish the above object, the present invention provides a computer-readable recording medium storing a program for executing a file processing method of executing a preprocessed file, including (a) when a request for registry information corresponding to an extension of a file selected by a user is input in response to a request for execution of the file, causing a preset substitute value, instead of a registry default value for running an associated program corresponding to the extension of the file, to be output as a result value for the request for registry information; (b) performing preprocessing set for the file by means of a control program set in accordance with the substitute value; and (c) executing the file by running an associated program for the file, corresponding to the registry default value, after performing the preprocessing.

In order to accomplish the other object, the present invention provides a file processing device for executing a preprocessed file, including a registry converting unit configured to, when a request for registry information corresponding to an extension of a file selected by a user is input in response to a request for execution of the file, cause a preset substitute value, instead of a registry default value for running an associated program corresponding to the extension of the file, to be output as a result value for the request for registry information; a control unit configured to perform preprocessing set for the file by means of a control program set in accordance with the substitute value; and a file executing unit configured to execute the file by running a substitute program preset in accordance with the file, after performing the preprocessing.

In order to accomplish the other object, the present invention provides a computer-readable recording medium storing a program for executing a file processing method of executing a preprocessed file, including (a) when a request for registry information corresponding to an extension of a file selected by a user is input in response to a request for execution of the file, causing a preset substitute value, instead of a registry default value for running an associated program corresponding to the extension of the file, to be output as a result value for the request for registry information; (b) performing preprocessing set for the file by means of a control program set in accordance with the substitute value; and (c) executing the file by running a substitute program preset in accordance with the file, after performing the preprocessing.

### Advantageous Effects

According to the file processing device for executing a preprocessed file and the recording medium for performing a method of executing a processed file on a computer in accordance with the present invention, a file for which a request for execution has been input is identified in advance, preprocessing required for the corresponding file is performed using a control program that is run prior to the running of the associated program of the corresponding file, and then the corresponding file is executed, thus being applied to an existing system without any limitations and also promoting a user's convenience.

### Description of Drawings

FIG. 1 is a block diagram illustrating the configuration of a preferred embodiment of a file processing device for executing a preprocessed file in accordance with the present invention;
FIG. 2 is a flowchart illustrating a process in which a file is executed in response to operations that are performed by a user, an explorer and an associated program;
FIG. 3 is a diagram illustrating an example of searching for a registry default value corresponding to information about the extension of a file;
FIG. 4 is a diagram illustrating an example of determining the associated program of txtfile;
FIG. 5 is a diagram illustrating an example of a registry search result corresponding to a substitute value; and
FIG. 6 is a flowchart illustrating the processing of a preferred embodiment of a file processing method of executing a preprocessed file in accordance with the present invention.

### Mode for Invention

Preferred embodiments of a file processing device for executing a preprocessed file and a recording medium for performing a method of executing a processed file on a computer in accordance with the present invention will be described in detail below with reference to the accompanying drawings.

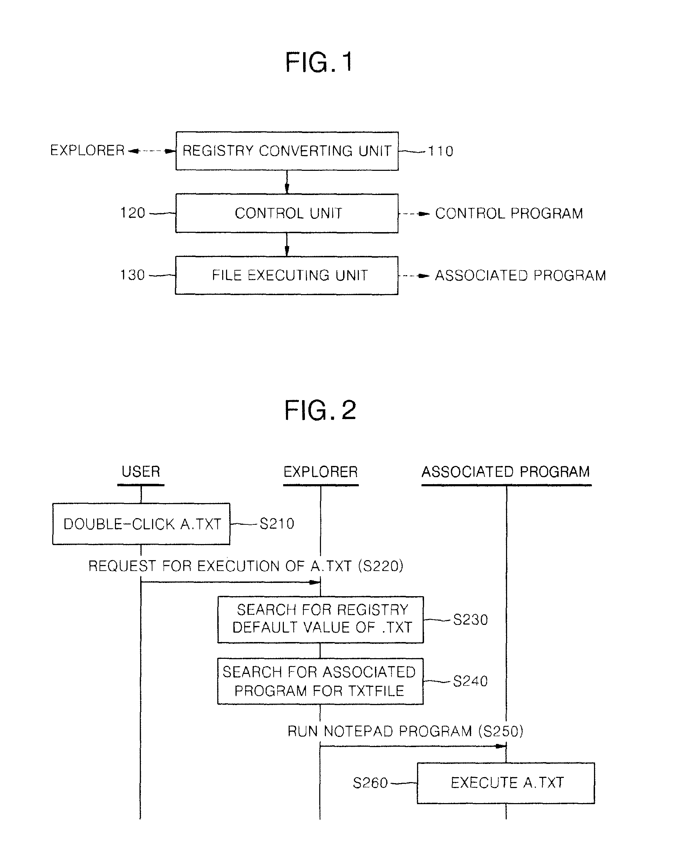

FIG. 1 is a block diagram illustrating the configuration of a preferred embodiment of a file processing device for executing a preprocessed file in accordance with the present invention.

Referring to FIG. 1, the file processing device for executing a preprocessed file in accordance with the present invention includes a registry converting unit 110, a control unit 120, and a file executing unit 130. Furthermore, the file processing device for executing a preprocessed file in accordance with the present invention is implemented to be applied to a file execution step using an explorer, which belongs to use cases at a virtualization step.

When a request for registry information corresponding to the extension of a file is input in response to a request for the execution of the file selected by a user, the registry converting unit 110 output a preset substitute value, instead of a registry default value for running a program corresponding to the extension of the file, as a result value for the request for registry information.

The user selects a file to be executed via the user interface (UI) of the explorer, and the selected file is executed by double-clicking the corresponding file or selecting one of various operations (Open, Edit, Print, Save As and the like) available for the corresponding file from the shell menu of the explorer. As a result, a file whose extension is not ".exe" and which is associated with a specific program is associated with a program which supports the corresponding extension on the Windows OS.

A general process of associating a file having a specific extension with a program that supports the extension of the corresponding file in order to perform an operation, such as Open/Edit/Print, on the file will be described below.

FIG. 2 is a flowchart illustrating a process in which a file is executed in response to operations that are performed by a user, an explorer and an associated program. The process illustrated in FIG. 2 is directed to a process in which a file whose extension is ".txt" and whose file name is "A" is executed.

Referring to FIG. 2, when a user double-clicks an A.txt file at step S210, a request for the execution of the A.txt file, in particular, a request for an Open operation, is generated and transferred to the explorer Explorer.exe at step S220. The explorer searches for extension information regarding ".txt" that is the extension of the A.txt file, that is, a registry default value, at step S230. More specifically, the registry default value corresponding to ".txt" is searched for in a menu under HKEY_CLASS_ROOT(HKCR) of a registry editor.

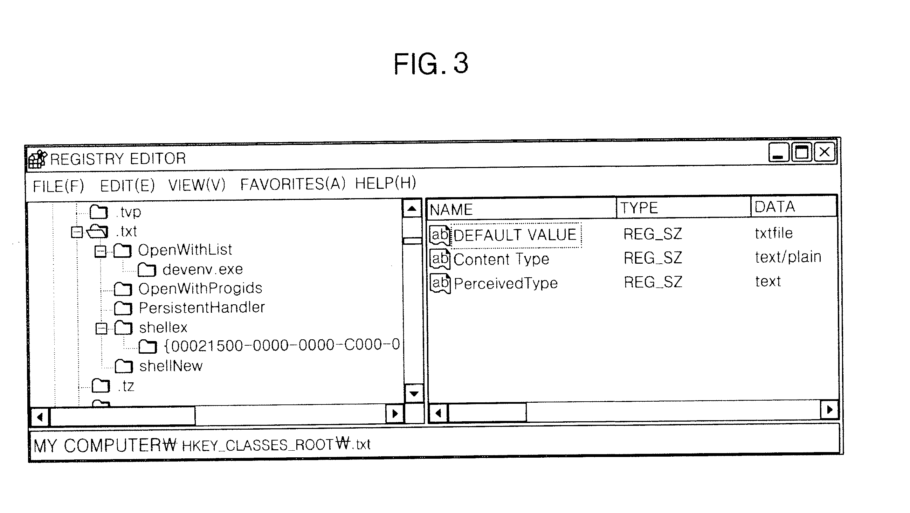

FIG. 3 is a diagram illustrating an example of searching for a registry default value corresponding to information about the extension of a file. Referring to FIG. 3, when ".txt," that is, the extension of an A.txt file, is searched for in the HKCR menu of a registry editor, "txtfile" is output as a default value. Thereafter, in the explorer, a "shell" key under txtfile is checked in the registry editor in order to search for an associated program corresponding to txtfile at step S240.

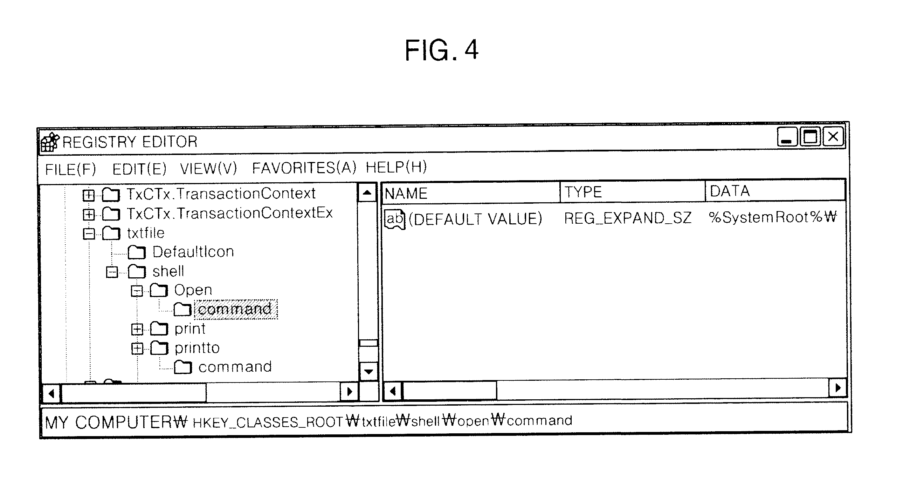

FIG. 4 is a diagram illustrating an example of determining an associated program for txtfile. Under the "shell" key, an "Open" key for an operation reserved for the A.txt file is located. Since Notepad that is an associated program for an Open operation for the text file does not support DDE, only a "command" key is present under the "Open" key. The default value for a "command" key illustrated in FIG. 4 is a run command for Notepad. Accordingly, it may be determined that the associated program that has been set for txtfile by default is Notepad.

Thereafter, in accordance with the result of a registry search, a process for Notepad, that is, an associated program, is generated and a Notepad program is run at step S250. Furthermore, Notepad is executed along with the A.txt file at step S260, and thus the user who has double-clicked the A.txt file can check the content of the A.txt file through the Notepad. Thereafter, the user may perform an additional operation, such as the editing of the A.txt file.

The present invention is implemented to perform preset additional processing on a corresponding file by modifying the above-described general file execution process. In particular, in the case of a sensitive file, when the blocking of execution or bypassed execution using another application is required, the present invention may be effectively used.

In the above-described general file execution process, when an execution request, such as a double click on a file, is received from a user, the explorer searches for information about an associated program based on information about the extension of the corresponding file, and finally the corresponding file is executed. Once the explorer has found a registry default value for the information about the extension of the corresponding file after an execution request was received from the user, the registry converting unit 110 of the file processing device for executing a preprocessed file in accordance with the present invention outputs a substitute value, other than an originally set registry default value, as a search result value.

Here, the substitute value is a value that is used to cause a control program for performing preprocessing set for the file, other than processing corresponding to the request from the user, on the corresponding file to run. The output of the substitute value by the registry converting unit 110 may be performed using an API hook, or may be performed using a virtualized shell in which a registry is executed in a virtualized environment, apart from the API hook.

Meanwhile, a method of directly modifying a registry may be used in order to output a substitute value as the result value of a search for a registry default value. However, if a method of filtering the result value of a registry search, instead of modifying a registry, is employed, it may be applied to the case in which preprocessing should be performed on a file regardless of the extension of the file, for example, the case in which preprocessing is performed depending on whether a file is in a DRM format, and there is no influence even when an associated program is changed by the installation of a new program or the like. Furthermore, when the process of outputting a substitute value in accordance with the present invention is stopped, the user's original OS environment is recovered, and thus the method is useful for the case in which it is necessary to switch an OS environment or to recover an original system as desired.

When the registry converting unit 110 outputs a substitute value as the result value of the registry search, the explorer searches for a program corresponding to the substitute value, and therefore a process for the execution of the control program is generated.

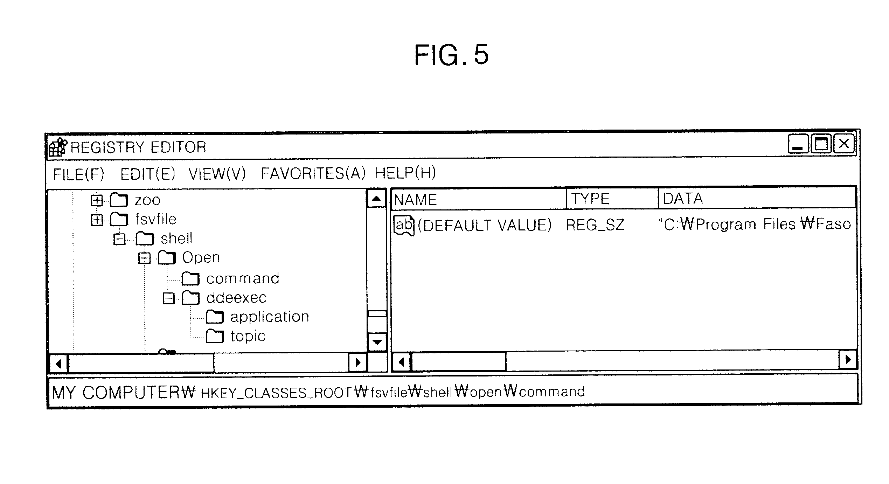

FIG. 5 is a diagram illustrating an example of a registry search result corresponding to a substitute value. In FIG. 5, "fsvfile" is a substitute value that is output as the result value of a registry search corresponding to the extension of a file that is selected by a user. The value shown in the search result of FIG. 5 corresponds to the location of a control program that is obtained as a result of the registry search for the substitute value.

The control unit 120 performs preprocessing, set for a file, using the control program that is run as a result of the registry search for the substitute value. The file processing device for executing a preprocessed file in accordance with the present invention runs the control program before an associated program corresponding to the extension information of the corresponding file is run after an execution request, such as a double click on a file, has been received from a user, and then performs additional preprocessing on the corresponding file.

As an example of preprocessing that may be performed in the above case, there may be a case in which the execution of a file is blocked when the corresponding file is determined to be a sensitive file, or a case in which a corresponding file is executed using another associated program, instead of an associated program that is set in accordance with the extension of the corresponding file on a system. More specifically, although an "AL See" program has been designated as an associated program for a file having the extension ".jpg," a file may be executed using an "mspaint.exe" program as an associated program if the corresponding file is a sensitive file. In addition, file-related preprocessing, such as a change in file format and execution logging, and process-related preprocessing, such as injection and a change in environment variable, may be performed.

As described above, the information that can be obtained from a file includes information about the size, name, attribute and associated program of the file, in addition to information about the extension of the file. The preprocessing that is performed by the control unit 120 may be set in various manners so that it can be performed using the obtained information. The file processing device for executing a preprocessed file in accordance with the present causes the invention control unit 120 to perform preprocessing, such as the above-described example through the process of converting the result value of a registry search into a substitute value, and then allows the file executing unit 130 to execute a file using an associated program, thereby promoting a user's convenience.

After the preprocessing has been performed on the file by the control unit 120, the file executing unit 130 executes the corresponding file using the associated program of the file corresponding to a registry default value for the extension of the file, that is, an associated program that is set by default on the system in accordance with the extension of the file.

If the preprocessing that is performed by the control unit 120 is directed to a change in the format of a file, an associated program that is run by the file executing unit 130 to execute the file may be the same as or different from an associated program before the change in the format. For example, if the control unit 120 changes the format of a file from ".jpg" to ".tif," the same associated program may support the two extensions. In contrast, if the control unit 120 changes the format of a file from ".hwp" to ".doc," associated programs that execute corresponding files may be different from each other. In this case, a substitute program that has been set for a file whose format has been changed is run and executes the corresponding file.

Meanwhile, if a file that is selected by the user is a file for which security has been set, a change in associated program may be performed as the preprocessing in order to prevent the file from being freely changed. In this case, the control unit 120 checks whether the corresponding file is a file for which security has been set, and provides information about a substitute program, which has been set such that it executes a file for which security has been set, to the file executing unit 130. Accordingly, the file executing unit 130 executes the file for which security has been set by running the substitute program.

The process in which the file is executed by the file executing unit 130 is the same as the existing file execution process described in conjunction with FIG. 2, and may be performed inside the control program. That is, after the processing that has been preset for the file has been performed by the control program, a registry default value corresponding to the extension of the file is searched for, and then the corresponding file is executed by running an associated program set on the system by default so that the user can check the file, as in the general file execution process.

Existing methods of supporting additional processing on a file, as in the present invention, include IShellExecuteHook and ShellExecuteEx API Hook. An IShellExecuteHook interface is a standard interface that is supported by the Windows Shell. When a COM object that supports the corresponding interface is generated and registered, all commands to be executed later will be filtered and allowed/blocked using a ShellExecuteEx API.

The file processing device for executing a preprocessed file in accordance with the present invention may identify whether security has been set for a corresponding file in advance and perform set processing before the execution of processing for the associated program of the corresponding file, compared to the existing methods that process a file through the execution detection of ShellExecuteEx as described above, thereby improving the user's convenience.

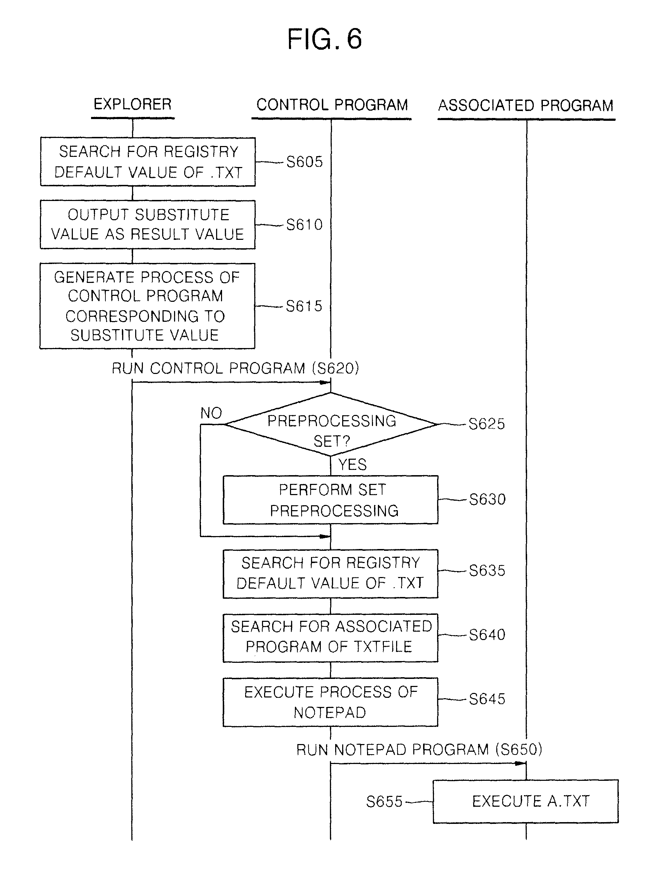

FIG. 6 is a flowchart illustrating the processing of a preferred embodiment of a file processing method of executing a preprocessed file in accordance with the present invention. The flowchart of FIG. 6 illustrates the operations of an explorer, a control program and an associated program that are performed when a request for the execution of an A.txt file is input.

Referring to FIG. 6, when a request for the execution of a file that is selected by a user is input, the explorer searches for the registry default value of ".txt," that is, the extension of the A.txt file, at step S605. The registry converting unit 110 of the file processing device for executing a preprocessed file in accordance with the present invention outputs a preset substitute value as the result value of the search for the registry default value at step S610. Thereafter, the process of a control program corresponding to the substitute value is generated by a registry search for the substitute value at step S615, and accordingly the control program is executed at step S620.

The control unit 120 checks whether preprocessing has been set for the file, selected by the user, using the control program at step S625. If preprocessing selected by the user or security has been set for the corresponding file, the set processing is performed at step S630. Since the preprocessing that may be performed on the file has been described above, a detailed description thereof will be omitted.

Thereafter, in order to run an associated program that is set by default for the A.txt file on the system, a registry default value corresponding to the extension ".txt" is searched for at step S635, and information about an associated program is obtained by a registry search for txtfile that is obtained as the result value at step S640. Thereafter, the process of Notepad, that is, an associated program that supports the extension ".txt," is generated at step S645, and the Notepad program is run at step S650. Finally, the A.txt file preprocessed by Notepad, that is, an associated program, is executed and therefore the user can check it at step S655.

The present invention may be implemented as computer-readable code on a computer-readable recording medium. The computer-readable recording medium includes all types of storage devices in which computer system-readable data is stored. Examples of the computer-readable recording medium include Read Only Memory (ROM), Random Access Memory (RAM), Compact Disk-Read Only Memory (CD-ROM), magnetic tape, a floppy disk, and an optical data storage device. Furthermore, the computer-readable recording medium may be implemented as carrier waves (for example, in the case of transmission over the Internet). Moreover, the computer-readable medium may be distributed across computer systems connected via a network, so that computer-readable code can be stored and executed in a distributed manner.

While the preferred embodiments of the present invention have been illustrated and described above, the present invention is not limited to the above-described specific preferred embodiments, anyone having ordinary knowledge in the art to which the invention pertains can make various modifications without departing from the gist of the present invention set forth in the attached claims. Furthermore, those modifications fall within the scope of the descriptions of the claims.

## Claims

1. A file processing device for executing a preprocessed file, comprising:
a registry converting unit configured to, when a request for registry information corresponding to an extension of a file selected by a user is input in response to a request for execution of the file, cause a preset substitute value, instead of a registry default value for running an associated program corresponding to the extension of the file, to be output as a result value for the request for registry information;
a control unit configured to perform preprocessing set for the file by means of a control program set in accordance with the substitute value; and
a file executing unit configured to execute the file by running an associated program for the file, corresponding to the registry default value, after performing the preprocessing.

2. The file processing device of claim 1, wherein the control unit performs the preprocessing for the file using a method that belongs to methods set in accordance with a plurality of pieces of extension information, respectively, and that corresponds to information about the extension of the file.

3. The file processing device of claim 1 or 2, wherein the preprocessing is converting the extension of the file into a preset substitute extension.

4. The file processing device of claim 1 or 2, wherein the preprocessing is generating an execution log for the file.

5. A file processing device for executing a preprocessed file, comprising:
a registry converting unit configured to, when a request for registry information corresponding to an extension of a file selected by a user is input in response to a request for execution of the file, cause a preset substitute value, instead of a registry default value for running an associated program corresponding to the extension of the file, to be output as a result value for the request for registry information;
a control unit configured to perform preprocessing set for the file by means of a control program set in accordance with the substitute value; and
a file executing unit configured to execute the file by running a substitute program preset in accordance with the file, after performing the preprocessing.

6. The file processing device of claim 5, wherein:
the preprocessing is converting the extension of the file into a preset substitute extension; and
the substitute program is a program that supports the substitute extension.

7. The file processing device of claim 5, wherein:
the file is a file for which security has been set; and
the control unit provides information about the substitute program, set in accordance with the file for which security has been set, to the file executing unit.

8. A computer-readable recording medium storing a program for executing a file processing method of executing a preprocessed file, comprising:
(a) when a request for registry information corresponding to an extension of a file selected by a user is input in response to a request for execution of the file, causing a preset substitute value, instead of a registry default value for running an associated program corresponding to the extension of the file, to be output as a result value for the request for registry information;
(b) performing preprocessing set for the file by means of a control program set in accordance with the substitute value; and
(c) executing the file by running an associated program for the file, corresponding to the registry default value, after performing the preprocessing.

9. The computer-readable recording medium of claim 8, wherein step (b) includes performing the preprocessing for the file using a method that belongs to methods set in accordance with a plurality of pieces of extension information, respectively, and that corresponds to information about the extension of the file.

10. The computer-readable recording medium of claim 8 or 9, wherein the preprocessing is converting the extension of the file into a preset substitute extension.

11. The computer-readable recording medium of claim 8 or 9, wherein the preprocessing is generating an execution log for the file.

12. A computer-readable recording medium storing a program for executing a file processing method of executing a preprocessed file, comprising:
(a) when a request for registry information corresponding to an extension of a file selected by a user is input in response to a request for execution of the file, causing a preset substitute value, instead of a registry default value for running an associated program corresponding to the extension of the file, to be output as a result value for the request for registry information;
(b) performing preprocessing set for the file by means of a control program set in accordance with the substitute value; and
(c) executing the file by running a substitute program preset in accordance with the file, after performing the preprocessing.

13. The computer-readable recording medium of claim 12, wherein:
the preprocessing is converting the extension of the file into a preset substitute extension; and
the substitute program is a program that supports the substitute extension.

14. The computer-readable recording medium of claim 12, wherein:
the file is a file for which security has been set; and
step (b) includes outputting information about the substitute program set in accordance with the file for which security has been set, thereby causing step (c) to be performed.
